# EUROPEAN PATENT APPLICATION

(11) **EP 4 311 650 A1**
(43) Date of publication of application: **31.01.2024**
(21) Application number: 23176577.7
(22) Date of filing: 01.06.2023
(51) Int. Cl.: B29C 45/14, A45C 5/02, B29C 45/34

(54) **INJECTION MOLDING METHOD, INJECTION MOLD, AND LUGGAGE SHAPING MOLD**

(30) Priority: 29.07.2022 CN 202210920073
(71) Applicant: CHUZHOU YUJIAN TRAVEL PRODUCT CO., LTD., Chuzhou, Anhui 239514 (CN)
(72) Inventor: Guo, Changjun, 239514 Chuzhou (CN); Huang, Changyong, 239514 Chuzhou (CN)
(74) Representative: Ipey

(57) **Abstract**

Provided are an injection molding method, an injection mold, and a luggage shaping mold. The method includes: obtaining (S1) an injection mold having a shell diaphragm placed inside; closing (S2) the injection mold and starting injection molding; performing (S3) the injection molding to obtain a luggage shell; and opening (S4) the injection mold to take the luggage shell. In this way, diversity of luggage design may be improved, the luggage may be more resistant to abrasion, and the problem that the appearance of the traditional injection molded luggage shell has marks and fusion lines may be solved.

## Description

### TECHNICAL FIELD

The present disclosure relates to the field of plastic processing, and in particular to an injection molding method, an injection mold, and a luggage shaping mold.

### BACKGROUND

A conventional injection mold for luggage shells includes a concave mold and a convex mold. A side of the concave mold is configured to match with a side of the convex mold, and that is, the side of the concave mold and the side of the convex mold have a same structure and similar sizes. When the concave mold and convex mold approach to each other, a molding cavity is defined between the two matched molds. A structure and a size of the molding cavity is a structure and a size of a designed luggage case. The other side of the concave mold or the other side of the convex mold defines with a sprue.

Traditionally, injection molding operations mainly include: closing molds, injecting melted plastic into the molding cavity through the sprue; ful-filling the molding cavity with the plastic to form a desired product (i.e., an injection-molded luggage shell); opening the molds and the product being attached to the convex mold; and ejecting the product.

The luggage shell obtained by performing the traditional injection molding operations may have the following main defects:

First, the luggage shell obtained by performing the traditional injection molding operations may have a single color. Even when the shell is printed by various colors, the printed colors may fall off easily. Products may not be diverse.

Secondly, an appearance of the luggage shell obtained by performing the traditional injection molding operations is not resistant to friction. The appearance may be scratched easily while being produced and in use, production quality of the injection-molded luggage may be poor, and the injection-molded luggage may not be used normally.

### SUMMARY OF THE DISCLOSURE

The present disclosure provides an injection molding method, an injection mold, and a luggage shaping mold, to solve the problem that the appearance of the luggage shell is less diverse and is not resistant to abrasion.

According to an aspect of the present disclosure, an injection molding method is provided and includes: obtaining an injection mold having a shell diaphragm placed inside; closing the injection mold and starting injection molding; performing the injection molding to obtain a luggage shell; and opening the injection mold to take the luggage shell.

In some embodiments, before the obtaining an injection mold having a shell diaphragm placed inside, the method further includes: obtaining the shell diaphragm by performing blistering molding.

In some embodiments, the injection mold includes a concave mold, a convex mold, a pulling frame and a heating frame; a first side of the concave mold defines an injection cavity; and the obtaining the shell diaphragm by performing blistering molding, includes: fixing a diaphragm or a sheet in the pulling frame; placing the pulling frame on the first side of the concave mold to cover the injection cavity; pressing the heating frame on a side of the pulling frame away from the concave mold; and heating the diaphragm or the sheet and performing the blistering molding through the concave mold to obtain the shell diaphragm.

In some embodiments, the injection mold includes a concave mold, a convex mold and a pulling frame; a first side of the concave mold defines an injection cavity; a first side of the convex mold is arranged with an injection protrusion corresponding to the injection cavity; and the obtaining the shell diaphragm by performing blistering molding, includes: placing the pulling frame, which is fixed with the diaphragm or the sheet, on a first side of the convex mold, sealing the pulling frame with the mold bracket on which the convex mold is placed, and heating the diaphragm or the sheet; and performing the blistering molding through the convex mold to obtain the shell diaphragm.

In some embodiments, the obtaining the shell diaphragm by performing blistering molding, includes: performing heating and blistering molding on the diaphragm or the sheet through a blistering mold to obtain the shell diaphragm.

In some embodiments, the obtaining an injection mold having a shell diaphragm placed inside, includes: placing the shell diaphragm in the concave mold of the injection mold and on a side corresponding to the convex mold of the injection mold; or placing the shell diaphragm on the convex mold of the injection mold and on a side corresponding to the concave mold of the injection mold.

In some embodiments, a thickness of the diaphragm or the sheet is between 0.1mm and 3.00mm, and the diaphragm or the sheet is made of at least one of :ABS, PC, PET, PP, PMMA or PVC.

According to another aspect of the present disclosure, an injection mold is provided and includes a concave mold and a convex mold, wherein a first side of the concave mold defines an injection cavity, a first side of the convex mold is arranged with an injection protrusion corresponding to the injection cavity. The injection mold is characterized in that, one of a second side of the concave mold and a second side of the convex mold defines a plurality of air outputting structures, the second side of the concave mold is opposite to the first side of second side of the concave mold, the second side of the convex mold is opposite to the first side of second side of the convex mold, the plurality of air outputting structures are communicated with a surface of the injection cavity or a surface of the injection protrusion.

In some embodiments, the injection mold further includes a pulling frame and a heating frame, the pulling frame is configured to fix the diaphragm or the sheet, and the heating frame is configured to heat the diaphragm or the sheet.

According to still another aspect of the present disclosure, a luggage shell shaping mold is provided and includes an injection mold and a blistering mold. The injection mold comprises a concave mold and a convex mold, a first side of the concave mold defines an injection cavity, and a first side of the convex mold is arranged with an injection protrusion corresponding to the injection cavity. A side of the blistering mold defines a blistering cavity or is arranged with a blistering protrusion matched with a shell diaphragm, a side of the blistering mold opposite to the blistering cavity or the blistering protrusion defines a plurality of air outputting structures, and the plurality of air outputting structures are communicated with a surface of the blistering cavity or a surface of the blistering protrusion.

According to the present disclosure, an injection mold having a shell diaphragm inside is obtained firstly, and then injection molding is performed. The shell diaphragm is attached or dissolved in the surface of the injected plastic, such that the shell diaphragm is fused with the plastic, and the shell for a luggage is obtained. A color of the diaphragm and a printing pattern of the diaphragm may be changed, such that a color a pattern on one shell may be changed at will, and the color may not fall off. In this way, a problem that one shell made by injection molding cannot have an increased number of colors or the color of the shell cannot be changed at will, may be solved, diversity of luggage design may be improved. In addition, diaphragms in various materials may be applied, or a hardening treatment may be specifically performed on a surface of diaphragm. In this way, the surface of injection molded shell has better abrasion resistance, such that quality of the products is improved. Furthermore, the present disclosure may solve the problem that the appearance of the traditional injection molded luggage shell has marks and fusion lines.

### BRIEF DESCRIPTION OF THE DRAWINGS

FIG. 1 is a flow chart of an injection molding method according to a first embodiment of the present disclosure.
FIG. 2 is a flow chart of an injection molding method according to a second embodiment of the present disclosure.
FIG. 3 is a flow chart of an injection molding method according to a third embodiment of the present disclosure.
FIG. 4 is a flow chart of an injection molding method according to a fourth embodiment of the present disclosure.
FIG. 5 is a structural schematic view of an injection mold according to the first embodiment of the present disclosure.
FIG. 6 is a structural schematic view of an injection mold according to the second embodiment of the present disclosure.
FIG. 7 is a structural schematic view of a luggage shell shaping mold according to the first embodiment of the present disclosure.
FIG. 8 is a structural schematic view of a luggage shell shaping mold according to the second embodiment of the present disclosure.
FIG. 9 is a schematic view of an operation 101 of an injection molding method A according to an embodiment of the present disclosure.
FIG. 10 is is a schematic view of an operation 102 of an injection molding method A according to an embodiment of the present disclosure.
FIG. 11 is a schematic view of an operation 103 of an injection molding method A according to an embodiment of the present disclosure.
FIG. 12 is a schematic view of an operation 104 of an injection molding method A according to an embodiment of the present disclosure.
FIG. 13 is a schematic view of an operation 105 of an injection molding method A according to an embodiment of the present disclosure.
FIG. 14 is a schematic view of an operation 107 of an injection molding method A according to an embodiment of the present disclosure.
FIG. 15 is a schematic view of an operation 108 of an injection molding method A according to an embodiment of the present disclosure.
FIG. 16 is a schematic view of an operation 109 of an injection molding method A according to an embodiment of the present disclosure.
FIG. 17 is a schematic view of an operation 110 of an injection molding method A according to an embodiment of the present disclosure.
FIG. 18 is a schematic view of an operation 111 of an injection molding method A according to an embodiment of the present disclosure.
FIG. 19 is a schematic view of an operation 201 of an injection molding method B according to an embodiment of the present disclosure.
FIG. 20 is a schematic view of an operation 202 of an injection molding method B according to an embodiment of the present disclosure.
FIG. 21 is a schematic view of an operation 203 of an injection molding method B according to an embodiment of the present disclosure.
FIG. 22 is a schematic view of an operation 204 of an injection molding method B according to an embodiment of the present disclosure.
FIG. 23 is a schematic view of an operation 205 of an injection molding method B according to an embodiment of the present disclosure.
FIG. 24 is a schematic view of an operation 301 of an injection molding method C according to an embodiment of the present disclosure.
FIG. 25 is a schematic view of an operation 302 of an injection molding method C according to an embodiment of the present disclosure.
FIG. 26 is a schematic view of an operation 303 of an injection molding method C according to an embodiment of the present disclosure.
FIG. 27 is a schematic view of an operation 304 of an injection molding method C according to an embodiment of the present disclosure.
FIG. 28 is a schematic view of an operation 305 of an injection molding method C according to an embodiment of the present disclosure.
FIG. 29 is a schematic view of an operation 306 of an injection molding method C according to an embodiment of the present disclosure.

### DETAILED DESCRIPTION

The technical solutions in the embodiments of the present disclosure will be clearly and completely described below by referring to the accompanying drawings in the embodiments of the present disclosure. Apparently, the described embodiments are only a part of but not all of the embodiments of the present disclosure. Based on the embodiments in the present application, all other embodiments obtained by any ordinary skilled person in the art without making creative work shall fall within the scope of protection of the present disclosure.

The terms "first", "second" and "third" in the present disclosure are used for descriptive purposes only and are not to be construed as indicating or implying relative importance or implicitly specifying the number of indicated technical features. Therefore, a feature defined by the "first", "second" and "third" may explicitly or implicitly include at least one such feature. In the description of the present disclosure, "a plurality of" means at least two, such as two, three, and so on, unless otherwise expressly and specifically limited.

It should be noted that when an element is defined as being "fixed" to another element, the element may be directly on the other element, or there may be an intermediate element. When an element is defined as being "connected" to another element, the element may be directly connected to the other element, or an intermediate element may be arranged. The terms "vertical", "horizontal", "left", "right" and similar expressions used herein are for illustrative purposes only.

Unless otherwise defined, all technical and scientific terms used herein have the same meaning as commonly understood by any ordinary skilled person in the art. The terms used herein in the specification of the present disclosure are for the purpose of describing specific embodiments only and shall not be interpreted as limiting the present disclosure. The terms "and/or" as used herein includes any and all combinations of one or more of the relevant listed items. References herein to "embodiments" mean that particular features, structures or properties described in the embodiments may be included in at least one embodiment of the present disclosure. The presence of the phrase at various sections in the specification does not necessarily mean one embodiment, nor is it a separate or alternative embodiment that is mutually exclusive with other embodiments. It is understood, both explicitly and implicitly, by any ordinary skilled person in the art that the embodiments described herein may be combined with other embodiments as long as there is no conflict.

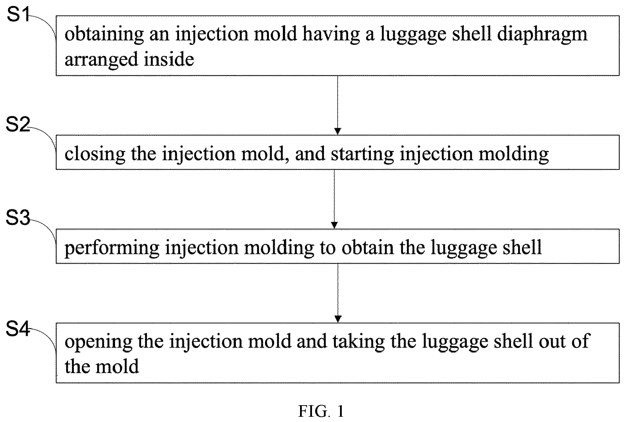

FIG. 1 is a flow chart of an injection molding method according to a first embodiment of the present disclosure. To be noted that the present embodiment is not limited to a sequence shown in FIG. 1, as long as a substantially the same technical effect can be achieved. As shown in FIG. 1, the present embodiment may include following.

S1, obtaining an injection mold having a luggage shell diaphragm arranged inside.

The injection mold includes a concave mold and a convex mold. A first side of the concave mold defines an injection cavity. A first side of the convex mold is arranged with an injection projection corresponding to the injection cavity. That is, the first side of the concave mold and the first side of the convex mold have a same structure and similar sizes. A sprue of the injection mold may be defined on a second side of the concave mold opposite to the first side of the concave mold, or on a second side of the convex mold opposite to the first side of the convex mold.

The shell diaphragm may be a complete diaphragm. A shape, a size and a structure of the shell diaphragm matches a luggage shell corresponding to the injection mold. Alternatively, the shell diaphragm may be a partial diaphragm corresponding to a part of the luggage shell, such as corresponding to a circular feature, a V-shaped feature of the luggage shell. When the shell diaphragm is the partial diaphragm, the number of shell diaphragms arranged inside the injection mold is not limited herein. Material, colors and patterns of the shell diaphragm may be determined according to the need.

Processing of shell diaphragms generally includes blistering. In addition, additional processes may be applied according to actual needs, such as a hardening treatment, a heat treatment, knife cutting, and so on.

The shell diaphragm may be obtained by blistering molding, before performing the present operation. Specifically, processing, including blistering, may be performed on the diaphragm or a sheet to obtain the shell diaphragm. Alternatively, a finished shell diaphragm may be obtained commercially.

S2, closing the injection mold, and startting injection molding.

The first side of the concave mold and the first side of the convex mold are brought together face to face with each other. A molding cavity is defined between the concave mold and the convex mold after the two molds are brought together. Melted plastic may be injected into the molding cavity through the sprue.

S3, performing injection molding to obtain the luggage shell.

The melted plastic fills the molding cavity, and the shell diaphragm is attached to or fused on a surface of the plastic, such that the melted plastic and the shell are integrated with each other, and the luggage shell is obtained.

S4, opening the injection mold and taking the luggage shell out of the mold.

According to the present disclosure, an injection mold having a shell diaphragm inside is obtained firstly, and then injection molding is performed. The shell diaphragm is attached or dissolved in the surface of the injected plastic, such that the shell diaphragm is fused with the plastic, and the shell for a luggage is obtained. A color of the diaphragm and a printing pattern of the diaphragm may be changed, such that a color a pattern on one shell may be changed at will, and the color may not fall off. In this way, a problem that one shell made by injection molding cannot have an increased number of colors or the color of the shell cannot be changed at will, may be solved, diversity of luggage design may be improved. In addition, diaphragms in various materials may be applied, or a hardening treatment may be specifically performed on a surface of diaphragm. In this way, the surface of injection molded shell has better abrasion resistance, such that quality of the products is improved. Furthermore, the present disclosure may solve the problem that the appearance of the traditional injection molded luggage shell has marks and fusion lines, and less material may be consumed.

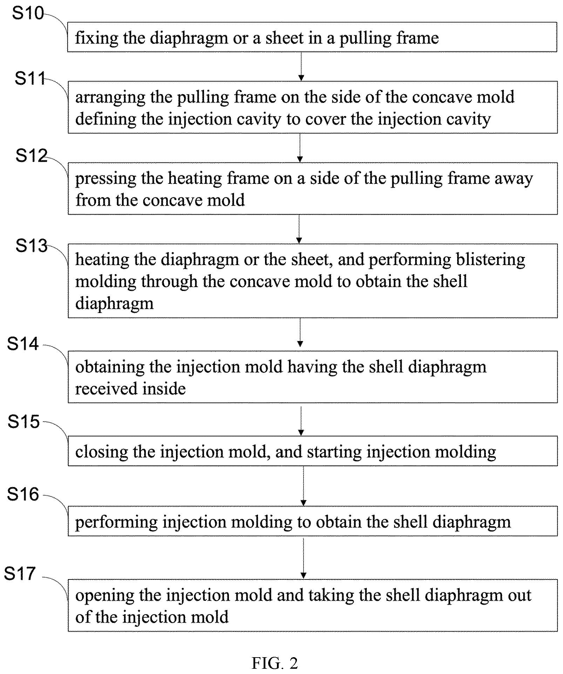

FIG. 2 is a flow chart of an injection molding method according to a second embodiment of the present disclosure. The present embodiment is a further extension of the first embodiment of the injection molding method of the present disclosure. Operations of the present embodiment identical to those in the previous embodiment will not be repeated here. It should be noted that the present embodiment is not limited to the sequence of processing operations shown in FIG. 2, as long as a substantially same technical effect can be achieved. As shown in FIG. 2, the present embodiment may include the following.

S10, fixing the diaphragm or a sheet in a pulling frame.

In the present embodiment, the concave mold of the injection mold further has a blistering molding function. The side of the concave mold away from the injection cavity, i.e., the second side, defines a plurality of sets of air outputting structures. The plurality of sets of air outputting structures are communicated with an interior or a surface of the injection cavity for performing blistering molding on the diaphragm or the sheet to obtain the shell diaphragm. In some embodiments, each air outputting structure is a hole-like structure or a small-sized air outputting slit.

In the present embodiment, the second side of the concave mold or the convex mold, i.e., the side opposite to the first side, defines the sprue. The sprue and the air outputting structure may both be defined in the concave mold. Alternatively, the sprue may be defined in the convex mold, while the air outputting structure is defined in the concave mold.

In addition to the concave mold and the convex mold, the injection mold the present embodiment further includes the pulling frame and a heating frame. The pulling frame is configured to fix the diaphragm or the sheet, and the heating frame is configured to heat the diaphragm or the sheet.

The pulling frame may define a fixation slot. The diaphragm or the sheet may be fixedly received in the fixation slot. The fixation slot may be designed according to a size and a location of the desired shell diaphragm. In some embodiments, a thickness of the diaphragm or the sheet is between 0.1mm and 3.00mm. The diaphragm or the sheet may be made of at least one of :ABS, PC, PET, PP, PMMA or PVC. When more than one materials are used, the diaphragm or the sheet may be a composite made of the more than one materials.

S11, arranging the pulling frame on the side of the concave mold defining the injection cavity to cover the injection cavity.

The side of the concave mold defining the injection cavity is the first side of the concave mold.

S 12, pressing the heating frame on a side of the pulling frame away from the concave mold.

S13, heating the diaphragm or the sheet, and performing blistering molding through the concave mold to obtain the shell diaphragm.

A heating temperature may be in a range from 60° to 280°. Air is pumped out of the concave mold through the air outputting structure to form a negative pressure. Due to the negative pressure, the diaphragm or the sheet is adsorbed to the surface of the concave mold to obtain the shell diaphragm.

In the present embodiment, operations S10-S13 describe a process of obtaining the shell diaphragm by performing blistering molding and by using the injection mold having the blistering molding function. In practice, other processes may be performed to treat the diaphragm or the sheet before and/or after the blistering molding, as needed.

S14, obtaining the injection mold having the shell diaphragm received inside.

The heating frame and the pulling frame may be moved. The diaphragm or the sheet, after being treated by the blistering molding, may be moved out of the concave mold, and may subsequently be cut and/or treated with other processes as needed to obtain the shell diaphragm. The obtained shell diaphragm may then be received in the injection cavity of the concave mold or on an injection projection of the convex mold.

Alternatively, the shell diaphragm, which is obtained after the blistering molding, is already received in the injection cavity. A shearing tool may be used first to cut the shell diaphragm as needed. When no further processing is required to performed on the shell diaphragm, the subsequent injection molding operation may be performed. The operations of removing and placing the shell diaphragm may be omitted.

The shearing tool may be a shearing mechanism arranged on the pulling frame, or a stand-alone shearing mechanism.

S15, closing the injection mold, and starting injection molding.

Before closing the injection mold, the heating frame and the pulling frame may be moved out of the area between the concave mold and the convex mold.

S16, performing injection molding to obtain the shell diaphragm.

S17, opening the injection mold and taking the shell diaphragm out of the injection mold.

The injection mold in the present embodiment also has the function of blistering molding. A process of "blistering molding and injection molding" may be fully automatically performed, and the mold does not need to be replaced during production processes, such that the production efficiency is improved.

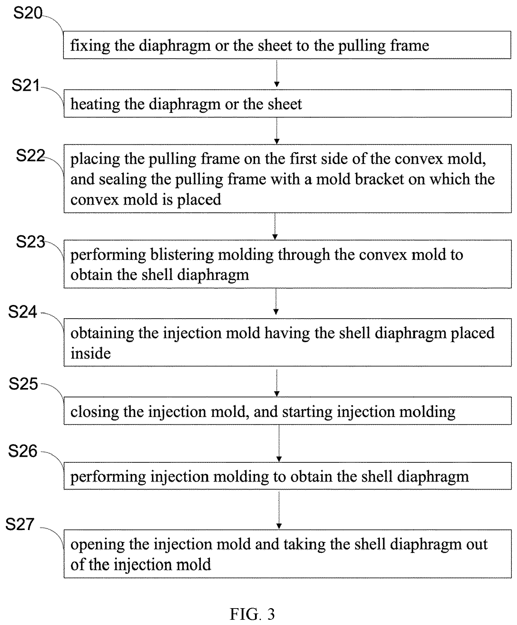

FIG. 3 is a flow chart of an injection molding method according to a third embodiment of the present disclosure. The present embodiment is a further extension of the first embodiment of the injection molding method of the present disclosure. Operations of the present embodiment identical to those in the previous embodiment will not be repeated here. It should be noted that the present embodiment is not limited to the sequence of processing operations shown in FIG. 3, as long as a substantially same technical effect can be achieved. As shown in FIG. 3, the present embodiment may include the following.

S20, fixing the diaphragm or the sheet to the pulling frame.

A main difference between the present embodiment and the second embodiment of the injection molding method of the present disclosure is that it is the convex mold, instead of the concave mold, that has the function of blistering molding. A plurality of sets of air outputting structures are defined in the side of the convex mold away from the injection protrusion, i.e., the second side of the convex mold. The plurality of sets of air outputting structures are communciated with the surface of the injection protrusion for performing the blistering molding on the diaphragm or the sheet to obtain the shell diaphragm. In some embodiments, each air outputting structure is a hole-like structure or a small-sized air outputting slit.

In the present embodiment, the second side of the concave mold or the convex mold, i.e., the side opposite to the first side, defines the sprue. The sprue and the outputting structure may both be defined in the convex mold. In some embodiments, the sprue is defined in the concave mold, and the outputting structure is defined in the convex mold.

In addition to the concave mold and the convex mold, the injection mold the present embodiment further includes the pulling frame. The pulling frame is configured to fix the diaphragm or the sheet

The pulling frame may define the fixation slot. The diaphragm or the sheet may be fixedly received in the fixation slot. The fixation slot may be designed according to a size and a location of the desired shell diaphragm.

In some embodiments, a thickness of the diaphragm or the sheet is between 0.1mm and 3.00mm. The diaphragm or the sheet may be made of at least one of :ABS, PC, PET, PP, PMMA or PVC.

S21, heating the diaphragm or the sheet.

The heating temperature is in the range of 60° to 280°. The diaphragm or the sheet may be heated by using the heating frame in the second embodiment of the injection molding method of the present disclosure. Alternatively, the diaphragm or the sheet may be heated by using other devices.

S22, placing the pulling frame on the first side of the convex mold, and sealing the pulling frame with a mold bracket on which the convex mold is placed.

After sealing, a main outlet port through which a space defined cooperatively by the pulling frame, the convex mold, and the mold bracket is communicated with an outside of the entire injection mold is the air outputting structure defined in the convex mold.

In the present embodiment, the diaphragm or the sheet is heated firstly, and then the diaphragm or the sheet is placed on the convex mold. In other embodiments, the operations may be performed reversely, that is, the pulling frame is placed on the convex mold and sealed to the mold bracket firstly, and then the diaphragm or the sheet is heated.

S23, performing blistering molding through the convex mold to obtain the shell diaphragm.

Specifically, air may firstly be blown into the convex mold through the air outputting structure to form a positive pressure. Due to the positive pressure, the diaphragm or the sheet is stretched outward. Further, the convex mold is controlled to move toward the pulling frame to lift the pulling frame. At the same time, the air is pumped out of the convex mold through the air outputting structure. Due to the pressure, the diaphragm or the sheet is evenly adsorbed to the injection protrusion, such that the shell diaphragm is obtained.

In the present embodiment, operations S20-S23 describe the process of using an injection mold having the blistering molding function for performing the blistering molding to obtain the shell diaphragm. In practice, other processes may be performed to treat the diaphragm or the sheet prior to and/or after the blistering molding, as needed.

S24, obtaining the injection mold having the shell diaphragm placed inside.

The convex mold may be controlled to be reset to be detached from the diaphragm or the shell that is treated by the blistering molding. Further, the diaphragm or the shell that is treated by the blistering molding is cut and/or treated by other processes as desired, such that the shell diaphragm is obtained. Further, the shell diaphragm is placed into the injection cavity of the concave mold or on the injection protrusion of the convex mold.

Alternatively, after the blistering molding is completed, the obtained shell diaphragm is already located on the injection protrusion. The shearing tool may be used first to cut the shell diaphragm as needed. When no further processing is required to performed on the shell diaphragm, the subsequent injection molding operation may be performed. The operations of removing and placing the shell diaphragm may be omitted.

The shearing tool may be a shearing mechanism arranged on the pulling frame, or a stand-alone shearing mechanism.

S25, closing the injection mold, and starting injection molding.

Before closing the injection mold, the pulling frame may be moved out of the area between the concave mold and the convex mold.

S26, performing injection molding to obtain the shell diaphragm.

S27, opening the injection mold and taking the shell diaphragm out of the injection mold.

The injection mold in the present embodiment also has the function of blistering molding. A process of "blistering molding and injection molding" may be fully automatically performed, and the mold does not need to be replaced during production processes, such that the production efficiency is improved.

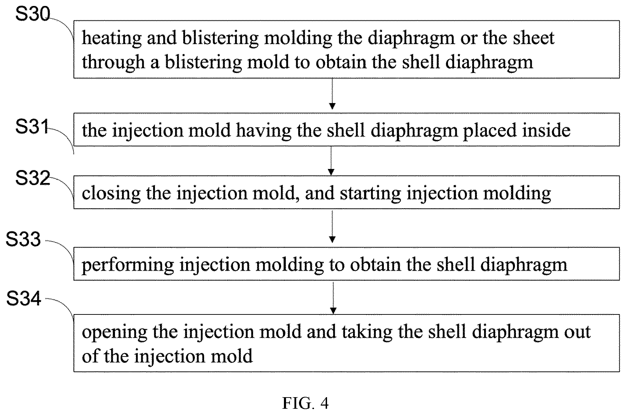

FIG. 4 is a flow chart of an injection molding method according to a fourth embodiment of the present disclosure. The present embodiment is a further extension of the first embodiment of the injection molding method of the present disclosure. Operations of the present embodiment identical to those in the previous embodiment will not be repeated here. It should be noted that the present embodiment is not limited to the sequence of processing operations shown in FIG. 4, as long as a substantially same technical effect can be achieved. As shown in FIG. 4, the present embodiment may include the following.

S30, heating and blistering molding the diaphragm or the sheet through a blistering mold to obtain the shell diaphragm.

The blistering mold in the present embodiment is independent of the injection mold. The blistering mold and the injection mold may cooperatively form a luggage shell shaping mold. The blistering mold may include a blistering concave mold or a blistering convex mold.

A side of the blistering mold defines a blistering cavity matching the shell diaphragm. A plurality of sets of air outputting structures are defined in a side opposite to the blistering cavity. The plurality of sets of air outputting structures are communicated with an interior of the blistering cavity or a surface of the blistering cavity.

A side of the blistering convex mold is arranged with a blistering protrusion corresponding to the shell diaphragm. A side opposite to the blistering projection defines a plurality of sets of air outputting structures. The plurality of sets of air outputting structures are communicated with a surface of the blistering protrusion.

When the shell diaphragm is a complete diaphragm, geometric parameters, such as structures, shapes and sizes, of the injection cavity are the same as the geometric parameters of the blistering cavity, except for thicknesses of the injection cavity and the blistering cavity. When the shell diaphragm is a complete diaphragm, geometric parameters, such as structures, shapes and sizes, of the injection protrusion are the same as the geometric parameters of the blistering protrusion, except for thicknesses of the injection protrusion and the blistering protrusion. When the shell diaphragm is a partial diaphragm, the geometric parameters of the blistering cavity/ blistering protrusion may be set according to actual needs. The geometric parameters of the blistering cavity/ blistering protrusion are not necessarily the same as those of the injection cavity/injection protrusion.

In some embodiments, the thickness of the diaphragm or the sheet is between 0.1mm to 3.00mm. The diaphragm or the sheet may be made of at least one of ABS, PC, PET, PP, PMMA or PVC.

The specific process of heating and blistering molding may be referred to the second/third embodiments of the injection molding method of the present disclosure. The difference is that the concave mold/convex mold of the injection mold having the blistering molding function in the second/third embodiments is replaced with the blistering mold of the present embodiment, which will not be repeated here.

The diaphragm or the sheet, which has been treated by the blistering molding, may be cut as needed to obtain the shell diaphragm.

In practice, other processes can be performed to treat the diaphragm or the sheet before and/or after the blistering molding is performed on the shell diaphragm, as needed.

S31, obtaining the injection mold having the shell diaphragm placed inside.

The shell diaphragm may be placed inside the concave mold of the injection mold and on the side of the concave mold corresponding to the convex mold of the injection mold. Alternatively, the shell diaphragm may be placed on the side of the convex mold of the injection mold corresponding to the concave mold of the injection mold. After the shell diaphragm is placed, the shell diaphragm may be fixedly received inside the injection cavity/arranged on the injection protrusion.

Since the injection mold in the present embodiment does not need to have the blistering molding function, the concave mold of the injection mold may not define the air outputting structure.

S32, closing the injection mold, and starting injection molding.

S33, performing injection molding to obtain the shell diaphragm.

S34, opening the injection mold and taking the shell diaphragm out of the injection mold.

Compared to the injection molding method in the second embodiment and the third embodiment, the processes of blistering molding and injection molding may be performed by replacing molds. A semi-automatic process is performed, a production efficiency of the present embodiment may be lower than the fully-automatic process. However, molds in the present embodiment may not be modified, and may be achieved more easily.

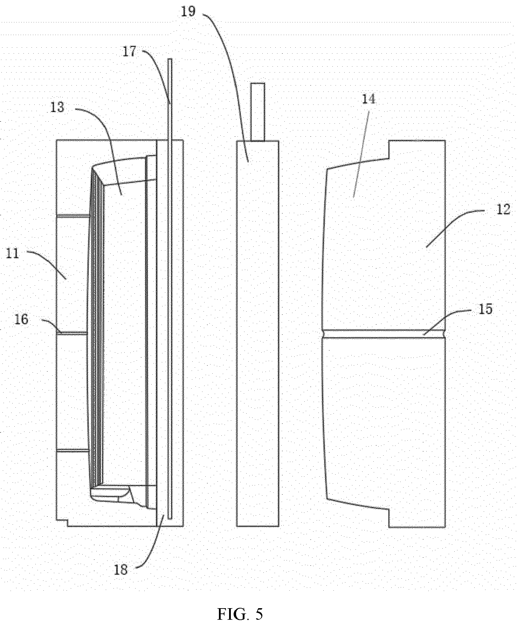

FIG. 5 is a structural schematic view of an injection mold according to the first embodiment of the present disclosure. As shown in FIG. 5, the present embodiment includes a concave mold 11 and a convex mold 12.

The first side of the concave mold 11 defines an injection cavity 13. The first side of the convex mold 12 is arranged with an injection protrusion 14 corresponding to the injection cavity 13. The other side, i.e., the second side, opposite to or far from the first side defines a sprue 15. In other embodiments, the sprue 15 may be defined in the side of the concave mold 11 far from the injection cavity 13, i.e., the second side of the concave mold 11. The side of the concave mold 11 away from the injection cavity 13, i.e., the second side of the concave mold 11, defines a plurality of air outputting structures 16, which are communicated with the surface of the injection cavity 3.

In some embodiments, each air outputting structure 16 is a hole-like structure or a small-sized air outputting slit.

The injection mold may further include a pulling frame 18 and a heating frame 19.

The pulling frame 18 is configured to fix the diaphragm or the sheet 17. The pulling frame 18 may define a fixation slot. The diaphragm or the sheet 17 is fixedly received in the fixation slot. A shearing tool may be arranged on the pulling frame 18. The diaphragm or the sheet, after being treated by blistering molding, may be cut by the shearing tool.

The heating frame 19 is configured to heat the diaphragm or the sheet 17, and the heating temperature may be in the range from 60° to 280°.

In some embodiments, the thickness of the diaphragm or the sheet 17 is between 0.1mm to 3.00mm, and the diaphragm or the sheet may be made of at least one of ABS, PC, PET, PP, PMMA or PVC.

In some embodiments, other tools may be arranged to fix and heat the diaphragm or the sheet during the heating and the blistering molding. In this case, the pulling frame 18 and the heating frame 19 may be omitted.

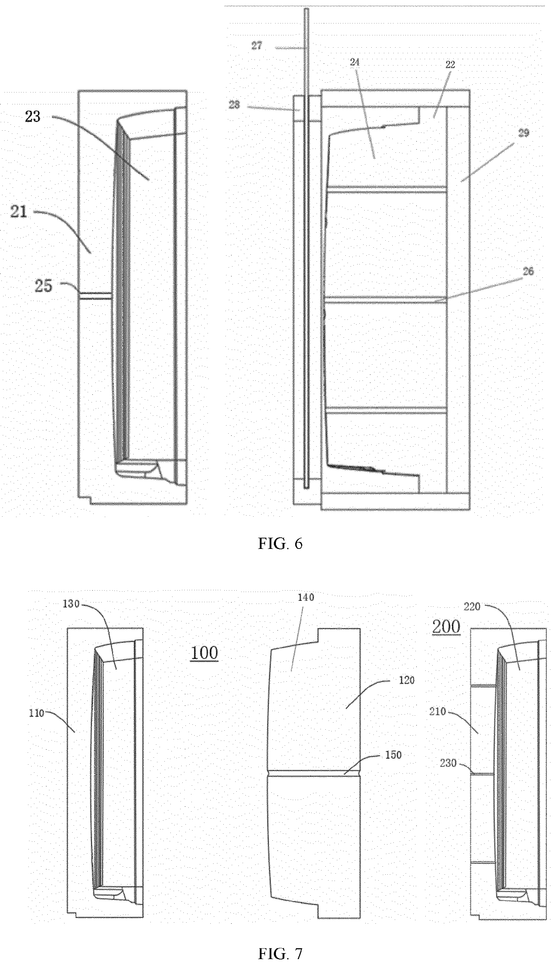

FIG. 6 is a structural schematic view of an injection mold according to the second embodiment of the present disclosure. As shown in FIG. 6, the present embodiment includes a concave mold 21 and a convex mold 22.

The first side of the concave mold 21 defines the injection cavity 23, and the second side defines a sprue 25. The first side of the convex mold 22 is arranged with an injection protrusion 24 corresponding to the injection cavity 23. In other embodiments, the sprue 25 may be defined in the side of the convex mold 22 away from the injection protrusion 24, i.e., the second side of the convex mold 22. The side of the mold 22 away from the injection protrusion 24, i.e., the second side of the mold 22, may define a plurality of sets of air outputting structures 26, which are communicated with the surface of the injection protrusion 24.

In some embodiments, each air outputting structure 26 is a hole-like structure or a small-sized air outputting slit.

The injection mold may further include a pulling frame 28 and a mold bracket 29.

The pulling frame 28 is configured to fix the diaphragm or the sheet 27. The pulling frame 28 may define a fixation slot. The diaphragm or the sheet 27 is fixedly received in the fixation slot. A shearing tool may be arranged on the pulling frame 28. The diaphragm or the sheet, after being treated by blistering molding, may be cut by the shearing tool.

The mold bracket 29 is configured to place and seal with the convex mold 22 during the blistering molding process.

In some embodiments, the thickness of the diaphragm or the sheet 27 is between 0.1mm to 3.00mm, and the diaphragm or the sheet may be made of at least one of ABS, PC, PET, PP, PMMA or PVC.

In some embodiments, other tools may be configured to fix the diaphragm or the sheet during the heating and the blistering molding. In this case, the pulling frame 28 and mold bracket 29 may be omitted.

FIG. 7 is a structural schematic view of a luggage shell shaping mold according to the first embodiment of the present disclosure. As shown in FIG. 7, the present embodiment includes an injection mold 100 and a blistering mold 200.

The injection mold 100 includes a concave mold 110 and a convex mold 120. The first side of the concave mold 110 defines an injection cavity 130, the first side of the convex mold 120 is arranged with an injection protrusion 140 corresponding to the injection cavity 130. The other side, i.e., the second side, opposite to or away from the first side may define a sprue 150. In other embodiments, the sprue 150 may be defined in the side of the concave mold 110 away from the injection cavity 130, i.e., the second side of the concave mold 110. Since the injection mold 100 in the present embodiment does not have the blistering molding function, neither the concave mold 110 nor the convex mold 120 of the injection mold 100 defines the air outputting structure for blistering molding.

The blistering mold 200 includes a blistering concave mold 210. A side of the blistering concave mold 210 defines a blistering cavity 220 matched with the desired shell diaphragm. For description purposes, the shell diaphragm in the present embodiment is a complete diaphragm, so the blistering cavity 220 matches with the injection cavity 130, i.e., the geometric parameters, such as structure, shape, and sizes of the injection cavity 130 are the same as those of the blistering cavity 220, except for the depths of the two cavities. In practice, the geometric parameters of the blistering cavity 220 may be determined according to the requirements, which may be different from those shown in the drawings. The side of the blistering mold 210 away from the blistering cavity 220 defines a plurality of sets of air outputting structures 230, which are communicated with the surface of the blistering cavity 220.

In some embodiments, each air outputting structure 230 is a hole-like structure or a small-sized air outputting slit.

In some embodiments, the blistering mold may further include a pulling frame and a heating frame. Details of the frames can be referred to corresponding description of the injection mold of the first embodiment.

In some embodiments, a thickness of the diaphragm or the sheet is between 0.1mm and 3.00mm. The diaphragm or the sheet may be made of at least one of: ABS, PC, PET, PP, PMMA or PVC.

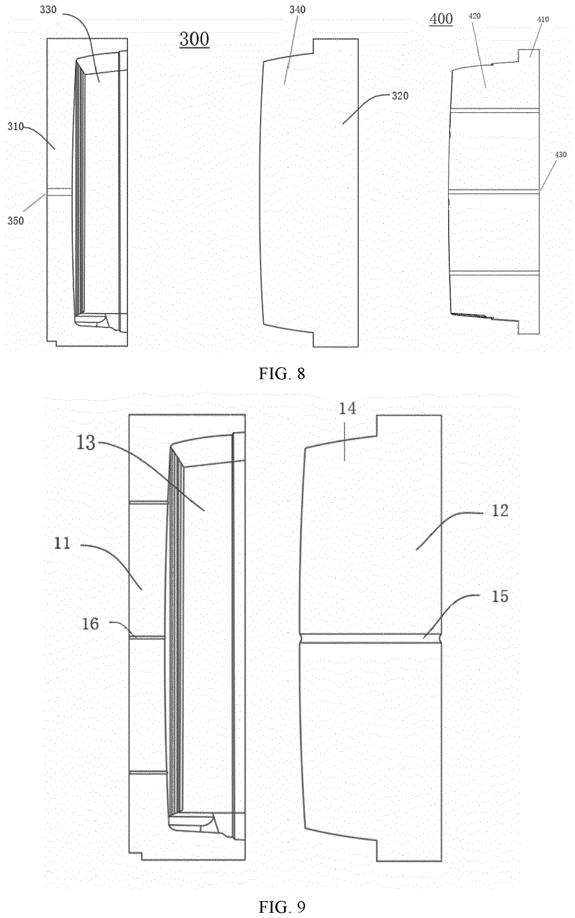

FIG. 8 is a structural schematic view of a luggage shell shaping mold according to the second embodiment of the present disclosure. As shown in FIG. 8, the present embodiment includes an injection mold 300 and a blistering mold 400.

The injection mold 300 includes a concave mold 310 and a convex mold 320. The first side of the concave mold 310 defines an injection cavity 330. The other side, i.e., the second side, opposite to or away from the first side may define a sprue 350. The first side of the convex mold 320 is arranged with an injection protrusion 340 corresponding to the injection cavity 330. In other embodiments, the sprue 350 may be defined in the side of the convex mold 320 away from the injection protrusion 340, i.e., the second side of the convex mold 320. Since the injection mold 300 in the present embodiment does not have the blistering molding function, neither the concave mold 310 nor the convex mold 320 of the injection mold 300 defines the air outputting structure for blistering molding.

The blistering mold 400 includes a blistering convex mold 410. A side of the blistering convex mold 410 is arranged with a blistering protrusion 420 matched with the desired shell diaphragm. For description purposes, the shell diaphragm in the present embodiment is a complete diaphragm, so the blistering protrusion 420 matches with the injection protrusion 340, i.e., the geometric parameters, such as structure, shape, and sizes of the blistering protrusion 420 are the same as those of the injection protrusion 340, except for the depths of the two protrusions. In practice, the geometric parameters of the blistering protrusion 420 may be determined according to the requirements, which may be different from those shown in the drawings. The side of the blistering mold 410 away from the blistering protrusion 420 defines a plurality of sets of air outputting structures 430, which are communicated with the surface of the blistering protrusion 420.

In some embodiments, each air outputting structure 430 is a hole-like structure or a small-sized air outputting slit.

In some embodiments, the blistering mold 400 may further include a pulling frame and a mold bracket. Details of the frame and the bracket can be referred to corresponding description of the injection mold of the second embodiment.

In some embodiments, a thickness of the diaphragm or the sheet is between 0.1mm and 3.00mm. The diaphragm or the sheet may be made of at least one of: ABS, PC, PET, PP, PMMA or PVC.

The following are examples of operation of three specific schemes of the injection molding method of the present disclosure, referring to the accompanying drawings.

In a technical solution A, as shown in FIG. 9 to FIG. 18, following operations are included.

In an operation 101, the concave mold 11 and the convex mold 12 are fixed on an injection molding machine table, and the two molds are in an open state (as shown in FIG. 9).

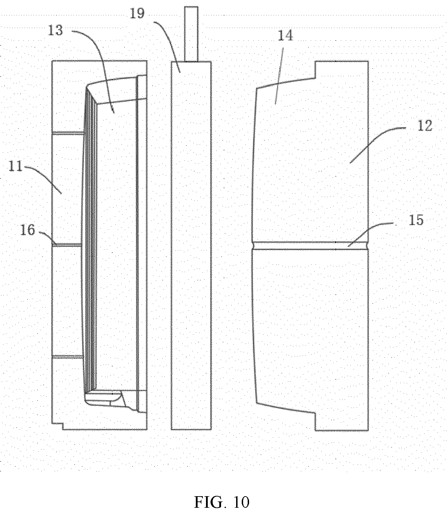

In an operation 102: the heating frame 19 is moved to a corresponding position of the mold (as shown in FIG. 10).

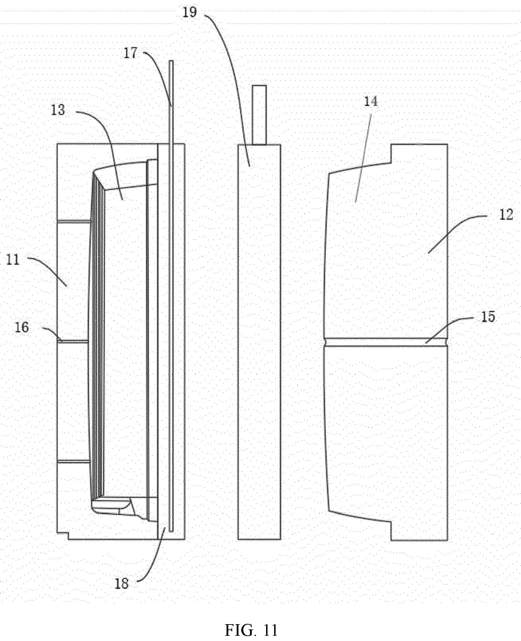

In an operation 103, the pulling frame 18, which clamps the diaphragm or the sheet 17, is controlled to move in place (as shown in FIG. 11).

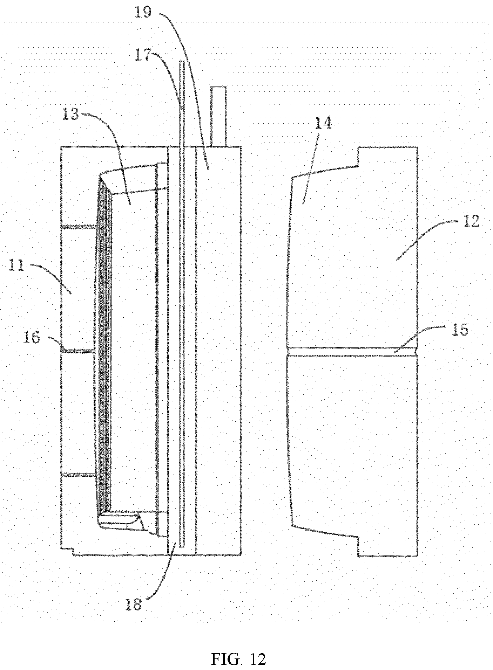

In an operation 104, the heating frame 19 is controlled to press the pulling frame 18 and starts heating at a temperature of 60° to 280° (as shown in FIG. 12).

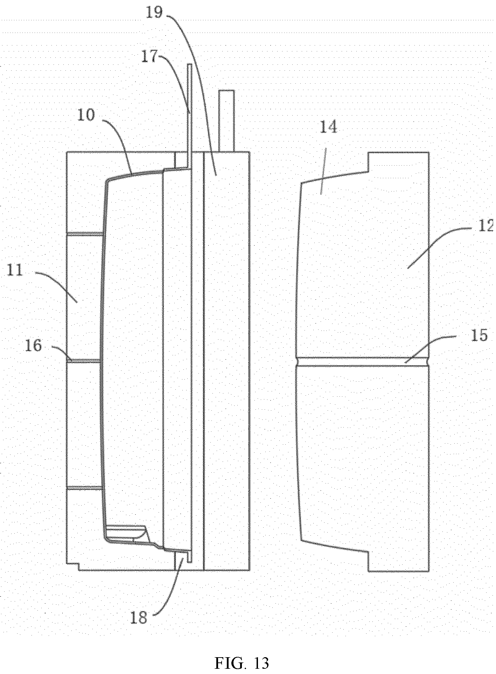

In an operation 105, after a heating time length is reached, air is pumped out of the concave mold 11 through the air outputting structure 16, such that the diaphragm or the sheet 17 is absorbed. When the blistering molding is completed, the shell diaphragm 10 is obtained (as shown in FIG. 13).

In an operation 106, the shearing mechanism on the pulling frame 18 performs automatic cutting on the shell diaphragm 10.

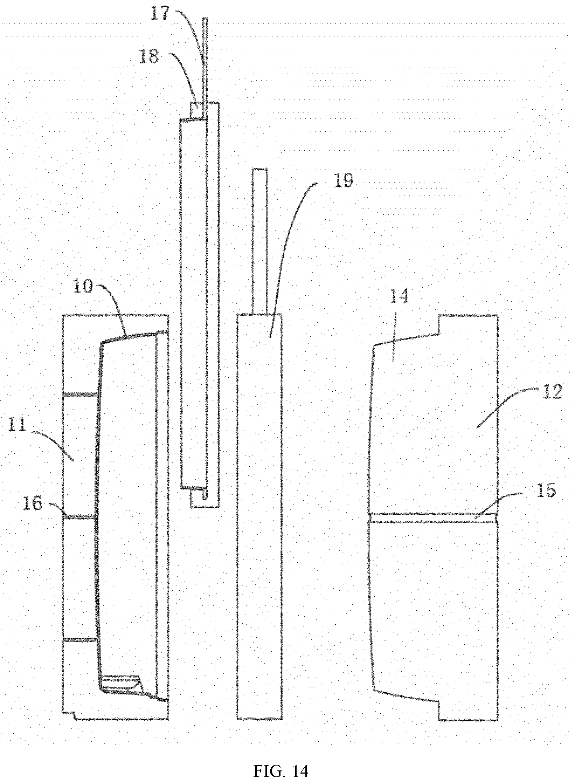

In an operation 107, the heating frame 19 is controlled to move to be detached from the pulling frame 18, and then the pulling frame 18 is controlled to move outwardly (as shown in FIG. 14).

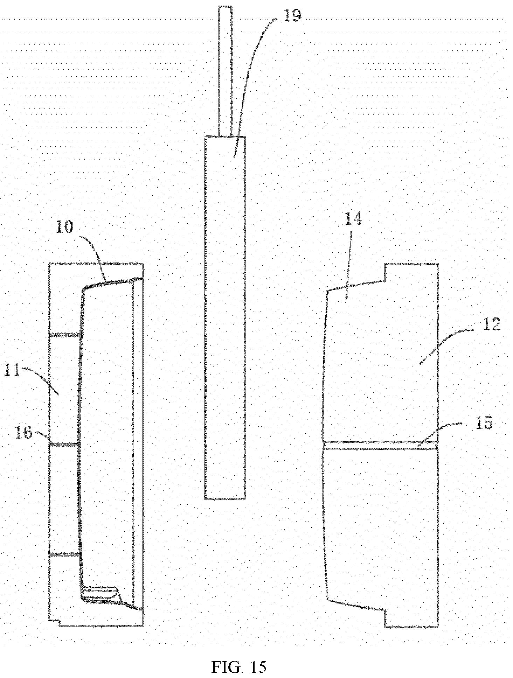

In an operation 108, the heating frame 19 is controlled to move outwardly, after the pulling frame 18 is moved out (as shown in FIG. 15).

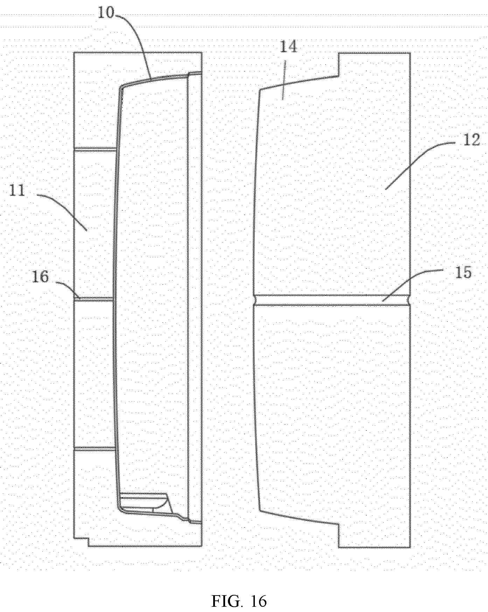

In an operation 109, injection molding is imitated, after the heating frame 19 is moved out (as shown in FIG. 16).

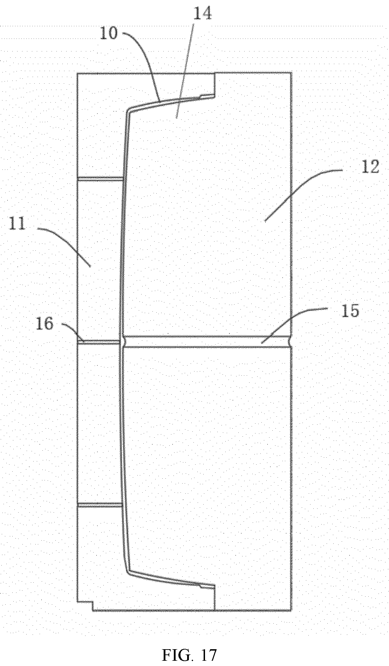

In an operation 110, after the concave mold 11 is closed with the convex mold 12, the plastic is injected into the mold from the sprue15, and the injection molding is performed (as shown in FIG. 17).

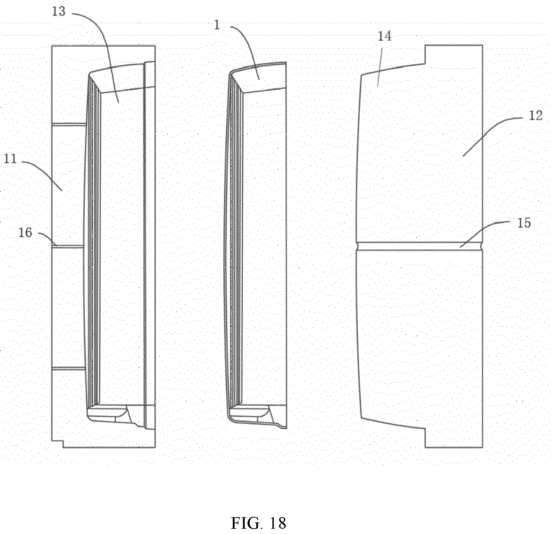

In an operation 111, the mold is open, and the molded luggage shell 1 is taken out (as shown in FIG. 18).

The above operations are repeated to perform massive production.

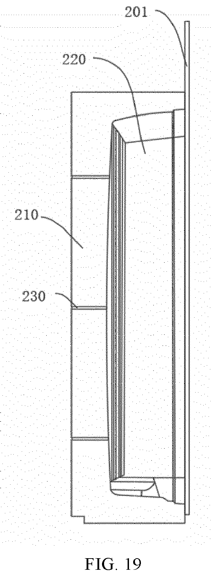

In a technical solution B, as shown in FIG. 19 to FIG. 23, following operations are included.

In an operation 201, the diaphragm or the sheet 201 is placed on the blistering cavity 220 of the blistering concave mole 210 (as shown in FIG. 19).

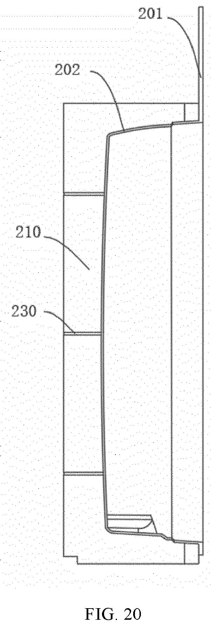

In an operation 202, blistering molding is performed on the diaphragm or the sheet 201, through the blistering concave mold 210, such that the shell diaphragm 202 is obtained (as shown in FIG. 20).

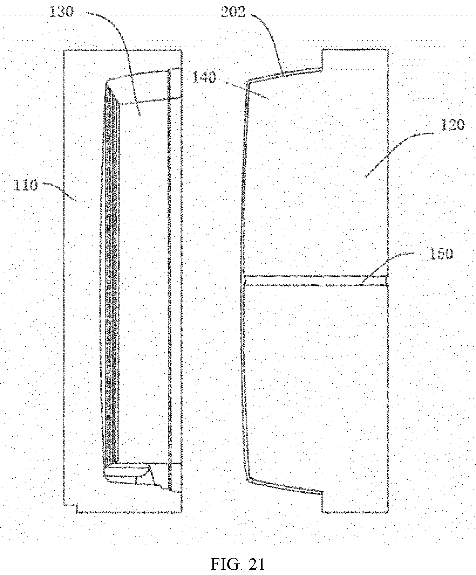

In an operation 203, the shell diaphragm 202 is fixed on the convex mold 120 of the injection mold (as shown in FIG. 21).

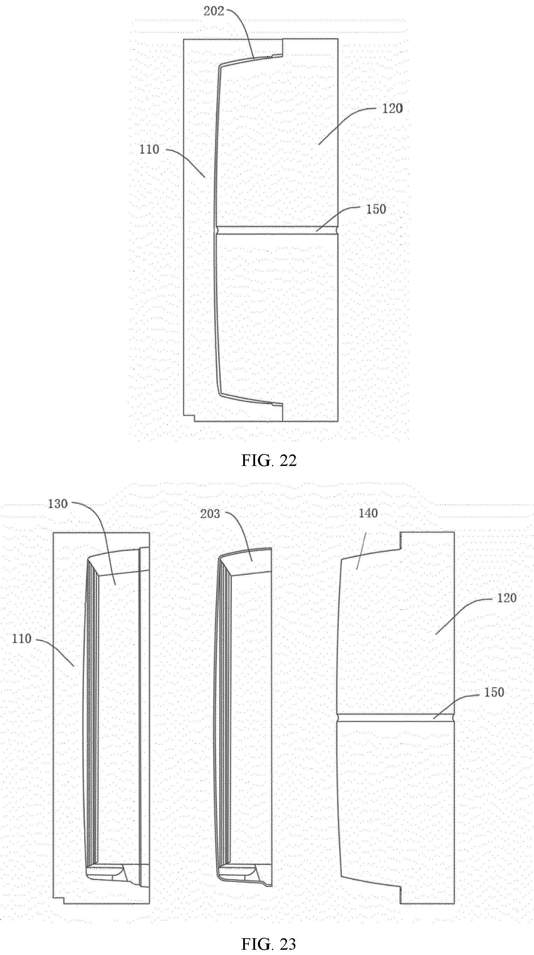

In an operation 204, after closing the concave mold 110 with the convex mold 120, the plastic is injected into the mold from the sprue 150 for injection molding (as shown in FIG. 22).

In an operation 205, the mold is opened, and the molded luggage shell 203 is taken out of the mold (as shown in FIG. 23).

The above operations are repeated to perform massive production.

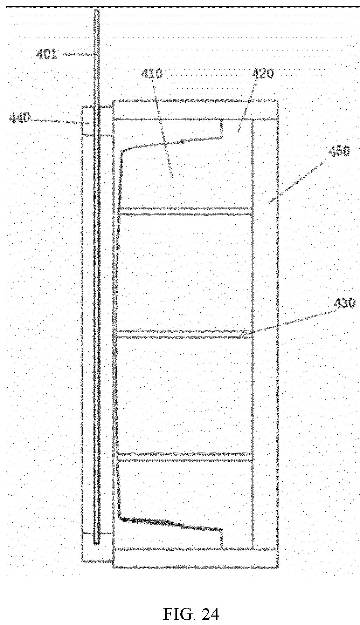

In a technical solution C, as shown in FIG. 24 to FIG. 29, following operations are included.

In an operation 301, the pulling frame 440 containing the diaphragm or the sheet 401 is placed on the blistering protrusion 420 of the blistering mold 410 and is sealed to the mold bracket 450 on which the blistering mold 410 is placed (as shown in FIG. 24).

The pulling frame 440 may be placed firstly and heated subsequently. Alternatively, the diaphragm or the sheet 401 may be placed in the pulling frame 440 and heated, and subsequently, placed on the blistering protrusion 420. Alternatively, the heated diaphragm or the heated sheet 401 may be placed in the pulling frame 440 and then placed on the blistering protrusion 420.

Subsequently, the air may be blown into the blistering protrusion 410 through the air outputting structure 430 to form a positive pressure, and the protrusion or the sheet 401 is stretched outward under the positive pressure.

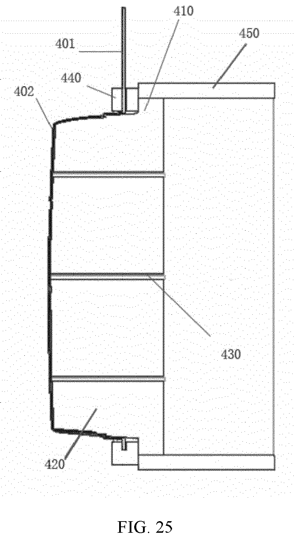

In an operation 302, the blistering protrusion 410 is controlled to move towards the pulling frame 440 to lift the pulling frame 440, and at the same time, the air is taken out the blistering protrusion 410 through the air outputting structure 430 (as shown in FIG. 25).

The diaphragm or the sheet 401 is evenly adsorbed to the blistering protrusion 420 under pressure.

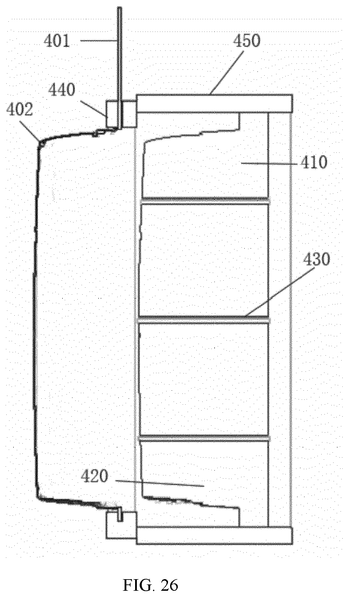

In an operation 303, the blistering protrusion 410 is controlled to be reset and is detached from the diaphragm or the sheet 401 that is treated by the blistering molding (as shown in FIG. 26).

The shell diaphragm 402 may then be taken out of the mold and cut to obtain the shell diaphragm.

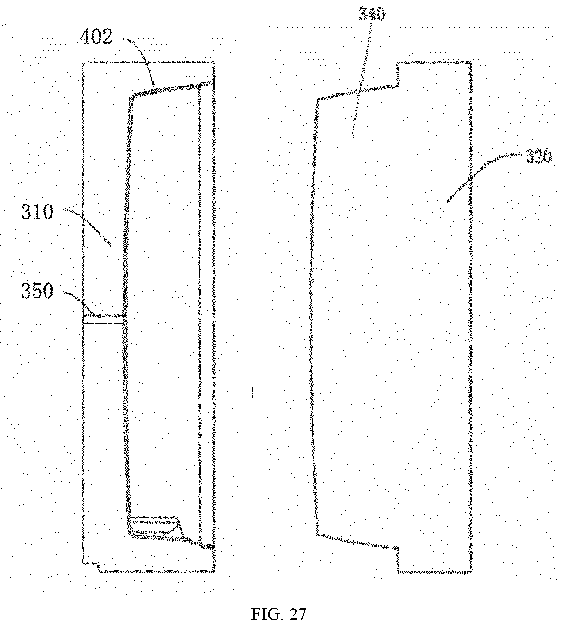

In an operation 304, the shell diaphragm 402 is received inside the concave mold 310 of the injection mold (as shown in FIG. 27).

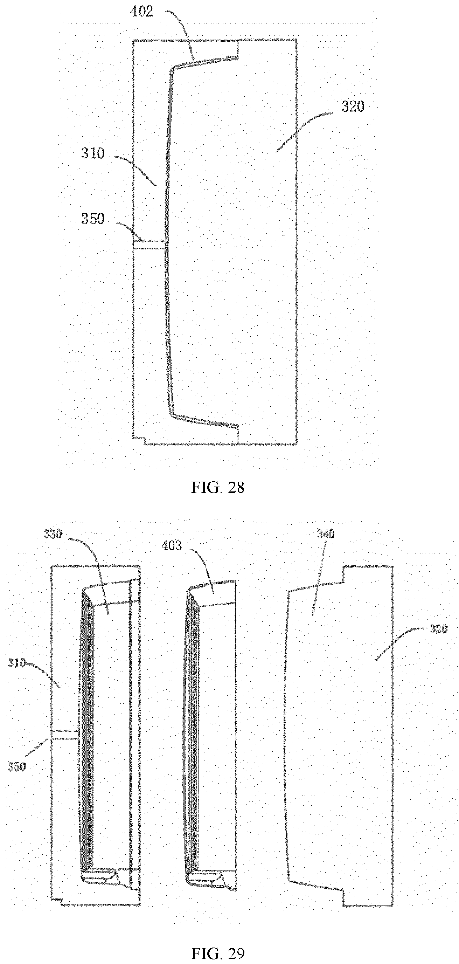

In an operation 305, after closing the concave mold 310 with the convex mold 320, plastic is injected into the mold from the sprue 350 for injection molding (as shown in FIG. 28).

In an operation 306, the mold is open, and the molded luggage shell 403 is taken out of the mold (as shown in FIG. 29).

The above operations are repeated to perform massive production.

In the several embodiments provided in the present disclosure, it should be understood that the disclosed systems, devices and methods, can be implemented in other ways. For example, the device embodiments described above are merely schematic. For example, the units are divided based on logical functions, but may be divided in another way when actually implemented. For example, multiple units or components may be combined or may be integrated into another system, or some features may be omitted or not implemented. On another point, mutual coupling or direct coupling or communicative connections shown or discussed may be indirect coupling or communicative connections achieved through some interfaces, devices or units. The connections may be electrical, mechanical or in other forms.

Alternatively, each functional unit in each embodiment of the present disclosure may be integrated in a single processing unit, or each unit may be physically present separately, or two or more units may be integrated in one unit. The above integrated units can be implemented either in the form of hardware or in the form of software functional units. The above shows only an implementation of the present disclosure, does not limit the scope of the patent of the present disclosure. Any equivalent structure or equivalent process transformation performed based on the content of the specification and the accompanying drawings of the present disclosure, applied directly or indirectly in other related technical fields, shall be included in the scope of the present disclosure.

## Claims

1. An injection molding method, **characterized by** comprising:
obtaining (S1) an injection mold having a shell diaphragm placed inside;
closing (S2) the injection mold and starting injection molding;
performing (S3) the injection molding to obtain a luggage shell; and
opening (S4) the injection mold to take the luggage shell.

2. The method according to claim 1, wherein before the obtaining (S1) an injection mold having a shell diaphragm placed inside, the method further comprises:
obtaining the shell diaphragm by performing blistering molding.

3. The method according to claim 2, wherein the injection mold comprises a concave mold, a convex mold, a pulling frame and a heating frame; a first side of the concave mold defines an injection cavity; and the obtaining the shell diaphragm by performing blistering molding, comprises:
fixing (S11) a diaphragm or a sheet in the pulling frame;
placing (S12) the pulling frame on the first side of the concave mold to cover the injection cavity;
pressing (S13) the heating frame on a side of the pulling frame away from the concave mold; and
heating (S14) the diaphragm or the sheet and performing the blistering molding through the concave mold to obtain the shell diaphragm.

4. The method according to claim 2, wherein the injection mold comprises a concave mold, a convex mold and a pulling frame; a first side of the concave mold defines an injection cavity; a first side of the convex mold is arranged with an injection protrusion corresponding to the injection cavity; and the obtaining (S1) the shell diaphragm by performing blistering molding, comprises:
placing (S22) the pulling frame, which is fixed with the diaphragm or the sheet, on a first side of the convex mold, sealing the pulling frame with the mold bracket on which the convex mold is placed, and heating the diaphragm or the sheet; and
performing (S23) the blistering molding through the convex mold to obtain the shell diaphragm.

5. The method according to claim 2, wherein the obtaining the shell diaphragm by performing blistering molding, comprises:
performing heating and blistering molding on the diaphragm or the sheet through a blistering mold to obtain the shell diaphragm.

6. The method according to claim 5, wherein the obtaining (S1) an injection mold having a shell diaphragm placed inside, comprises:
placing the shell diaphragm in the concave mold of the injection mold and on a side corresponding to the convex mold of the injection mold; or
placing the shell diaphragm on the convex mold of the injection mold and on a side corresponding to the concave mold of the injection mold.

7. The method according to any one of claims 3 to 5, wherein a thickness of the diaphragm or the sheet is between 0.1mm and 3.00mm, and the diaphragm or the sheet is made of at least one of :ABS, PC, PET, PP, PMMA or PVC.

8. An injection mold, comprising a concave mold (11) and a convex mold (12), wherein a first side of the concave mold (11) defines an injection cavity (13), a first side of the convex mold (12) is arranged with an injection protrusion (14) corresponding to the injection cavity (13);
wherein the injection mold is **characterized in that**, one of a second side of the concave mold (11) and a second side of the convex mold (12) defines a plurality of air outputting structures (16), the second side of the concave mold (11) is opposite to the first side of second side of the concave mold (11), the second side of the convex mold (12) is opposite to the first side of second side of the convex mold (12), the plurality of air outputting structures (16) are communicated with a surface of the injection cavity (13) or a surface of the injection protrusion (14).

9. The injection mold according to claim 8, wherein the injection mold further comprises a pulling frame (18) and a heating frame (19), the pulling frame (18) is configured to fix a diaphragm or the sheet (17), and the heating frame (19) is configured to heat the diaphragm or the sheet (17).

10. A luggage shell shaping mold, **characterized by** comprising an injection mold and a blistering mold (200);
wherein the injection mold comprises a concave mold (11) and a convex mold (12), a first side of the concave mold (11) defines an injection cavity (13), and a first side of the convex (12) mold is arranged with an injection protrusion (14) corresponding to the injection cavity (13);
a side of the blistering mold (200) defines a blistering cavity (220) or is arranged with a blistering protrusion (420) matched with a shell diaphragm, a side of the blistering mold opposite to the blistering cavity or the blistering protrusion defines a plurality of air outputting structures (230), and the plurality of air outputting structures (230) are communicated with a surface of the blistering cavity or a surface of the blistering protrusion.
